# EUROPEAN PATENT APPLICATION

(11) **EP 1 236 787 A2**
(43) Date of publication of application: **04.09.2002**
(21) Application number: 02004322.0
(22) Date of filing: 28.02.2002
(51) Int. Cl.: C10B 1/04, C10B 55/00

(54) **Coke drum, method of constructing and use thereof**

(30) Priority: 28.02.2001 US 795413
(71) Applicant: Citgo Petroleum Corporation, Tulsa, Oklahoma 74102-3758 (US)
(72) Inventor: Schulz, Clinton, Corpus Cristi, Texas 78410 (US)
(74) Representative: UEXKÜLL & STOLBERG

(57) **Abstract**

An apparatus for accumulating coke includes a coke drum having an upper head, a lower section, and a generally cylindrical wall having a height parallel to its longitudinal axis and extending between and joined to the upper head and the lower section. The wall includes an upper ring and a lower ring, each of which has a height parallel to the longitudinal axis of the wall which is in a range of zero percent to 25 percent of the height of the wall. The wall also includes an intermediate ring which extends between and is joined to the upper ring, if present, and the lower ring, if present. The intermediate ring has a length which is equal to a cumulative length of the upper ring and the lower ring subtracted from the length of the wall. The intermediate ring is free of joints which extend in a circumferential direction of the wall.

## Description

### FIELD OF THE INVENTION

This invention is directed generally to an apparatus and method for accumulating coke in a petroleum refining process. In one aspect, the invention relates to a coke drum for accumulating coke in a petroleum refining process. In another aspect, the invention relates to a coking system having a coke drum for accumulating coke in a petroleum refining process. In yet another aspect, the invention relates to a method for constructing a coke drum for accumulating coke in a petroleum refining process. In a further aspect, the invention relates to a method of operating a coke drum for accumulating coke in a petroleum refining process.

### BACKGROUND OF THE INVENTION

Petroleum refining is the recovery and production of usable products from crude oil. Heated crude oil is injected as a feedstock into a fractionating tower wherein various volatile fractions or portions, for example, gasoline, kerosene, and naphtha, are separated from the crude oil. The nonvolatile portion falls to the bottom of the fractionating tower as a process residuum. The residuum is used as a feedstock to the coking process, which converts the nonvolatile, heavy residuum into lighter, distillable products and petroleum coke.

Coking is a semicontinuous process in which the heated residuum is transferred into large soaking, or coking, drums which provide the residence time needed for the cracking reactions to proceed to completion. The residuum is first heated to a temperature within a range of about 480-515°C (895-960°F). The heated residuum then enters one of a pair or more of coking drums wherein the cracking reactions continue.

The products which are cracked as a result of the coking process leave the coke drum as overhead materials and coke deposits form within the coke drum. To provide continuous operation, two or more drums are used. While one drum is on-stream, the one or more off-stream drums are decoked and cleaned. The temperature in the on-stream coke drum is within a range of about 415-465°C (780-870°F) with pressures within a range of about 103-621 kPa (15-90 psi). Vapors produced in the on-stream coking drum are returned to the fractionating tower for further processing. As this process progresses, petroleum coke accumulates in the on-stream coke drum.

Once the volume of accumulated coke in the on-stream coke drum has reached about 80 percent of the volume of the coke drum, the heated residuum feedstock is switched to flow into another coke drum and the process is repeated. The coke in the filled coke drum must now be cooled and removed from the coke drum. Steam is often injected into the coke drum from the bottom to drive off any remaining vapors remaining in the coke drum. Water is then introduced into the bottom portion of the coke drum to quench the coke. The coke is then cut and removed from the coke drum.

The quench water follows the fissures and fractures in the body of coke, resulting in non-uniform cooling of the coke and therefore the coke drum wall. The resulting thermal gradients in the coke drum wall produce stresses, and therefore strains, which accumulate as coking cycles are repeated. As the coke drum is subjected to more operating cycles, the coke drum wall bulges and low-cycle thermal fatigue cracks form in the coke drum wall.

Others have recognized the thermal fatigue problem and have developed processes to control the rate at which coke, and thus the coke drum wall, is quenched. In U.S. Patent No. 4,634,500 to Elliott et al, the rate at which quench water is introduced into a coke drum is controlled so that neither a longitudinal thermal gradient nor a rate of change in coke drum wall temperature exceeds a threshold amount. In U.S. Patent No. 5,795,445 to Boswell et al, the rate of admission of quench water into a coke drum is controlled in response to a determined stress in a coke drum wall. The stress is determined by interpreting the output of at least one strain gage affixed to the coke drum wall. U.S. Patent No. 5,932,089 to Moore discloses a system in which a rate of injection of quench water into the coke drum is regulated based upon the volume of coke accumulated therein.

Instead of controlling the rate at which quench water is introduced into the coke drum, U.S. Patent No. 5,804,038 discloses a coke drum in which a cooling jacket is attached to a portion thereof. As quench water is introduced into the coke drum, a cooling fluid is flushed through the cooling jacket to cool the coke drum wall. The temperature of the coke drum wall is reduced prior to the quench water reaching the area that is susceptible to bulging and cracking, which results in lower thermal gradients in the coke drum wall.

Each of these prior approaches minimizes stress in the coke drum wall by controlling the rate of cooling in the coke drum wall, either by adjusting the rate of admission of quench water, or by otherwise cooling the coke drum wall prior to the quench water reaching the area which is susceptible to cracking. A need exists, however, for a coke drum for accumulating coke which is intrinsically less susceptible to bulging and cracking due to non-uniform cooling of the coke drum during quenching. A need also exists for a method of constructing and a method of operating such a coke drum.

### BRIEF SUMMARY OF THE INVENTION

The present invention is a new and advantageous apparatus and method for accumulating coke during the petroleum refining process.

One object of the present invention is to provide a coke drum that is less susceptible to bulging and cracking due to non-uniform cooling of the coke drum during quenching.

Another object of the invention is to provide a coke drum that is less susceptible to bulging and cracking due to non-uniform cooling of the coke drum during quenching irrespective of the rate at which quench water is introduced into the coke drum.

A further object of the present invention is to provide a coking system having a coke drum that is less susceptible to bulging and cracking due to non-uniform cooling of the coke drum during quenching.

Yet another object of the present invention is to provide a method of constructing a coke drum that is less susceptible to bulging and cracking due to non-uniform cooling of the coke drum during quenching.

Yet a further object of the present invention is to provide a method of operating a coke drum that is less susceptible to bulging and cracking due to non-uniform cooling of the coke drum during quenching.

These and other objects are attained by a coke drum which includes an upper head and a lower section, a portion of which is capable of being moved from a coking operation position to a coke removal position. A generally cylindrical wall having a height parallel to its longitudinal axis extends between and is joined to the upper head and the lower section. The wall is comprised of an upper ring, a lower ring, and an intermediate ring and has a height which is parallel to its longitudinal axis. Each of the upper ring and the lower ring have heights parallel to the longitudinal axis of the wall which are within a range of 0 percent to 25 percent of the height of the wall. The intermediate ring extends between and is joined to the upper ring, if present, and the lower ring, if present. The intermediate ring has a height parallel to the longitudinal axis of the wall which is equal to a cumulative height of the upper ring and the lower ring subtracted from the height of the wall. Further, the intermediate ring is free of joints which extend in a circumferential direction of the wall.

It has been found that bulging and thermal fatigue cracking are most commonly observed along or adjacent to circumferentially extending joints within a portion of a coke drum wall that corresponds to the intermediate ring of the present invention. Accordingly, since the intermediate ring of the coke drum wall of the present invention has no circumferentially extending joints, the coke drum is intrinsically less susceptible to bulging and cracking.

The present invention also includes a coking system having a plurality of coke drums for accumulating coke and an input valve which can selectively provide communication between a source of residuum and the plurality of coke drums, wherein the valve is capable of receiving a flow of residuum from the source of residuum and providing the flow of residuum to a selected one of the plurality of coke drums. At least one of the plurality of coke drums is a coke drum, such as that disclosed above, which is intrinsically less susceptible to bulging and cracking.

Further, the present invention includes a method for constructing a coke drum of the present invention and a method for operating a coke drum of the present invention.

### BRIEF DESCRIPTION OF THE DRAWINGS

Other advantages and features of the invention will become more apparent with reference to the following detailed description of the invention in connection with the accompanying drawings, in which:
FIG. 1 is a diagram of a coking system of the present invention;
FIG. 2 is an elevational view of a coke drum showing upper, intermediate, and lower portions thereof;
FIG. 3 is an elevational view of a first embodiment of a coke drum of the present invention;
FIG. 4 is an elevational view of a second embodiment of a coke drum of the present invention; and
FIG. 5 is an elevational view of a third embodiment of a coke drum of the present invention.

### DETAILED DESCRIPTION OF THE INVENTION

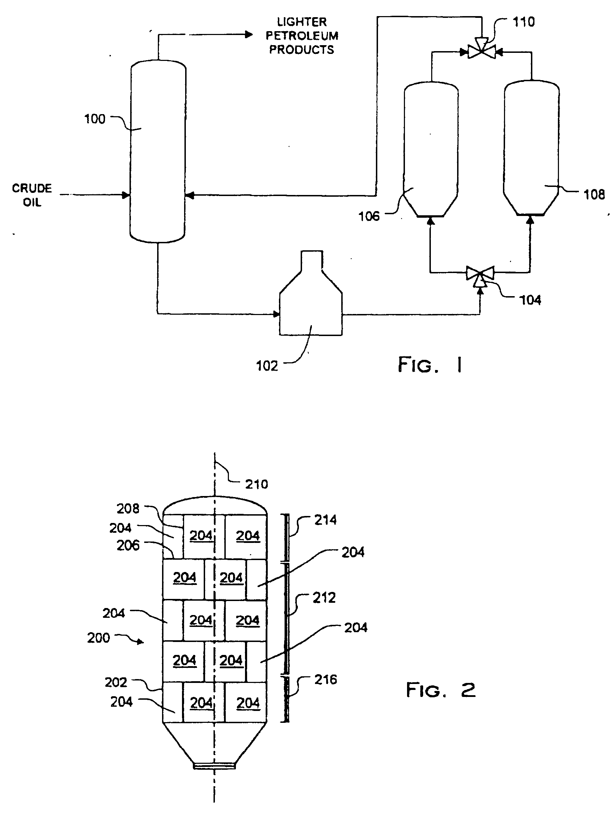

Referring to the drawings, and FIG. 1 in particular, shown therein is a diagram of a coking system of the present invention. Heated crude oil is introduced as a feedstock into a fractionator 100. The nonvolatile portion of the feedstock descends to the bottom of the fractionator 100 as a residuum, while the vapors pass up through the fractionator 100 to be separated into lighter petroleum products, for example, gasoline, kerosene, jet fuel and diesel fuel. The residuum, which is typically an asphalt-like material, is pumped from the fractionator 100 and through a furnace 102 to raise the temperature of the residuum to within a range of approximately 480-515°C (895-960°F). The flow of residuum is then directed by an inlet valve 104 either into a first coke drum 106 or into a second coke drum 108. In this example, two coke drums 106 and 108 are disclosed; however, any number of coke drums may be employed depending upon the requirements of the refining process. While one coke drum is on-stream, the off-stream coke drum is emptied and cleaned. The temperature in the on-stream coke drum is within a range of approximately 415-465°C (780-870°F) with pressures within a range of approximately 103-621 kPa (15-90 psi). The residuum is accumulated over time in the on-stream coke drum wherein it is held for a sufficient amount of time for the cracking or separating reactions to proceed to completion. Vapors that are produced by the separating residuum are directed from the on-stream coke drum by the outlet valve 110 back to the fractionator 100, where they are recovered. Typically, the on-stream coke drum receives the residuum until it is filled to about 80 percent of its volume with accumulated coke, after which the flow of residuum is redirected by the inlet valve 104 into the previously off-stream coke drum. Steam is often introduced into the filled coke drum to drive off vapors which have accumulated in the filled coke drum. The coke in the filled coke drum is then quenched and removed, and the drum is cleaned and readied for the next coking cycle.

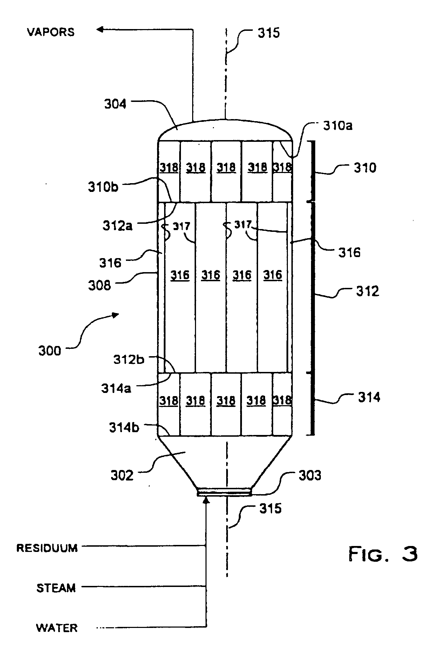

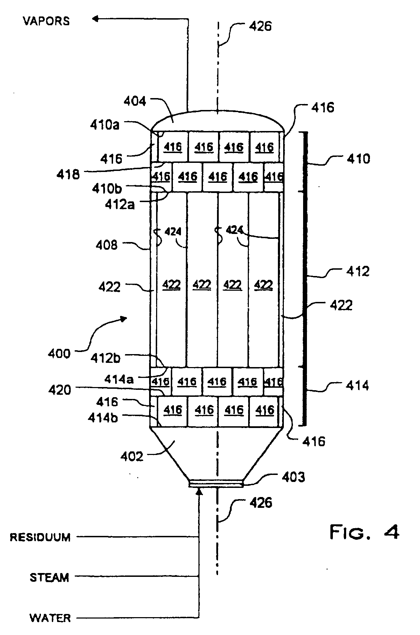

At least one of the coke drums 106 and 108 in the coking system of FIG. 1 is a coke drum of the present invention, such as the embodiments of FIGS. 3-5.

Referring now to FIG. 2, a coke drum 200 is comprised of a wall 202, which is typically constructed of a plurality of contoured, steel panels 204. Adjacent panels 204 are generally welded along mating edges thereof to form circumferentially extending weld joints 206 (one indicated) and longitudinally extending weld joints 208 (one indicated). Circumferentially extending weld joints extend along, but not necessarily completely around, a circumference or periphery of a coke drum wall (e.g., a circumference or periphery of the wall 202) and longitudinally extending weld joints extend generally parallel to a longitudinal axis of a coke drum wall (e.g., a longitudinal axis 210 of the wall 202). Quench water is introduced into the coke drum 200 after it has been filled to a working capacity with accumulated coke. During the quenching process, quench water follows the fissures and fractures in the body of coke, resulting in nonuniform cooling of the wall 202 of the coke drum 200. The resulting thermal gradients in the wall 202 of the coke drum 200 result in stresses, and thus strains, which accumulate as the number of coking cycles increases. As the strains build up, the drum wall 202 bulges, forming a corrugated shape and creating fatigue cracks therein.

It has been found that bulges and thermal fatigue cracks in the coke drum wall 202 are most commonly observed along or adjacent to the circumferentially extending weld joints 206. In particular, the cracks are seen along or adjacent to the circumferentially extending weld joints 206 in an intermediate portion 212 of the coke drum wall 202. Steam generated from the quench water, which is introduced into the coke drum 200 from the bottom thereof, reduces the temperature of the upper portion 214 of the coke drum 200 before the level of the quench water reaches the upper portion 214 of the coke drum wall 202. Further, the upper portion 214 of the coke drum wall 202 is not completely in contact with the coke; therefore, this portion of the coke drum wall 202 cools more evenly. Thus, the upper portion 214 of the coke drum wall 202 is less affected by bulging and cracking. The lower portion 216 of the coke drum wall 202 is less affected by bulges and cracks since the quench water bypasses the coke drum wall 202 in the lower portion 216 by following naturally-formed flow channels in the coke. As a result of these and other factors, bulging and cracking in the coke drum wall 202 occurs most frequently in the intermediate portion 212 of the coke drum wall 202.

The height of the intermediate portion 212, measured parallel to the longitudinal axis 210, is generally equal to at least about 50 percent of the height of the wall 202, also measured parallel to the longitudinal axis 210. The height of the lower portion 216, measured parallel to the longitudinal axis 210, is generally equal to or less than about 25 percent of the height of the wall 202. Accordingly, the upper portion 214 has a height parallel to the longitudinal axis 210 which is also generally equal to or less than about 25 percent of the height of the wall 202.

As the number of coke accumulation cycles accrues for a coke drum 200, the low cycle thermal fatigue cracks propagate through the coke drum wall 202 and most frequently extend circumferentially around the coke drum wall 202. Further, the cracks generally extend along or adjacent to circumferentially extending weld joints 206 in the intermediate portion 212 of the coke drum wall 202.

Cracking occurs along circumferentially extending weld joints 206 because of several factors. Firstly, a weld joint is a juncture of several materials, e.g., base metal, base weld metal, corrosion-resistant cladding, and cladding restoration weld metal. The base metal for these types of vessels is typically carbon steel, C-½Mo steel, 1¼ Cr steel, or 2¼ Cr steel and typical cladding is 12 Cr steel, for example, type 410 stainless steel. Each of these materials has a different coefficient of thermal expansion and yield strength, as shown in Table 1:

**Table 1.**

| **Material** | **Coefficient of Thermal Expansion** mm/m/°C (in/in/°F) | **0.2% Yield Strength** **at 460°C** **N&T = Normalized & Tempered** MPa (ksi) |
|---|---|---|
| Carbon steel | 0.0138 (7.65x10⁻⁶) | 172 (N&T) (25) |
| C-½Mo steel | 0.0138 (7.65x10⁻⁶) | 217 (N&T) (32) |
| 1¼Cr-½Mo steel | 0.0136 (7.53x10⁻⁶) | 241 (N&T) (35) |
| 2¼ Cr-1Mo steel | 0.0136 (7.53x10⁻⁶) | 283 (N&T) (41) |
| Type 410 stainless steel | 0.0115 (6.39x10⁻⁶) | 184 (27) |

Thus, a temperature change of 300°C (540°F) can result in a thermal expansion differential within a range of 0.63-0.69 mm/m (0.55x10⁻³-0.72x10⁻³ in/in) and a yield strength differential within a range of 12-111 MPa (2-16 ksi). These values are taken from Steels for Elevated Temperature Service, 1972, United States Steel Corporation.

Further, the weld joint is often slightly thicker than the adjoining panels, resulting in a geometric discontinuity. These factors tend to concentrate strains at the weld joints. The ductility of the weld joint and the heat affected zone adjacent to the weld joint may be less than that of the panels that are joined by the weld joint, which may result in fewer cycles to failure even if the stress and strain on the weld seam and heat affected zone is the same as that on the panels.

The manufacture and cross-sectional dimensions of circumferentially extending weld joints 206 and longitudinally extending weld joints 208 in the coke drum 200 are generally the same. Both types of weld joints have substantially the same inherent properties relating to low-cycle thermal fatigue and, if each were to be subjected to similar operating stresses, each would likely have similar low-cycle thermal fatigue lives. The cylindrical geometry of the coke drum 200, however, results in the circumferentially extending weld joints 206 being subjected to higher levels of stress than the longitudinally extending weld joints 208. The coke drum wall 202 can bend more easily to accommodate a circumferential thermal gradient, whereas the coke drum wall 202 is not able to bend easily to accommodate a longitudinal thermal gradient. This difference in the bending stiffness of the coke drum wall 202 results in higher stresses in the circumferentially extending weld joints 206 as compared to stresses in the longitudinally extending weld joints 208 when both seam types are subjected to thermal gradients of similar magnitudes.

Referring now to FIG. 3, shown therein is a first embodiment of the present invention. Coke drum 300 has a lower section 302, an upper head 304, and a wall 308. The lower section 302 has a lower head 303. The wall 308 is a hollow, generally cylindrical structure and is comprised of an upper ring 310, an intermediate ring 312, and a lower ring 314. The upper head 304 is circumferentially welded to the upper end 310a of the upper ring 310, the lower end 310b of the upper ring 310 is circumferentially welded to the upper end 312a of the intermediate ring 312, and the lower end 312b of the intermediate ring 312 is circumferentially welded to the upper end of the lower ring 314. Further, the lower section 302 is joined to the lower end 314b of the lower ring 314 and the lower head 303 is capable of being moved from a coking operation position to a coke removal position for removal of coke from the coke drum 300. Thus, the assembly of the lower section 302, the upper head 304, and the wall 308, including the upper ring 310, intermediate ring 312, and lower ring 314, constitutes a coke drum 300 which is substantially pressure-tight except for conduits which provide communication with the interior of the coke drum 300.

The overall height of the wall 308 is generally within a range of 12-25 m (40-80 ft) but can be any height desired within the limits of the coking process. The diameter of the wall 308 is generally within a range of 4-9 m (14-28 ft) and is typically approximately 6 m (20 ft). These dimensions apply generally to the various embodiments of the present coke drum invention disclosed herein. It is not required, however, that the dimensions of a coke drum fall within these ranges in order for the coke drum to be within the scope of the present invention.

Generally, the heights of each of the upper ring 310 and the lower ring 314, measured parallel to the longitudinal axis 315 of the wall 308, are in a range of zero percent to about 25 percent of the height of the wall 308 parallel to the longitudinal axis 315 and can be in a range of 10 percent to 20 percent of the height of the wall 308. Accordingly, the height of the intermediate ring 312 falls within a range of about 50 percent to 100 percent of the height of the wall 308, as measured parallel to the longitudinal axis 315, and can be at least 60 percent, at least 70 percent, in a range of 50 percent to 80 percent, or in a range of 60 percent to 80 percent of the height of the wall 308. Further, if any of the rings 310, 312, or 314 have varying heights, the height of the ring is defined as the average height of the ring for purposes of the height relationships disclosed herein. Comparing FIGS. 2 and 3, it can be seen that the intermediate ring 312 corresponds to the intermediate portion 212 wherein bulging and thermal fatigue cracking tends to occur.

The intermediate ring 312 is made up of a plurality of longitudinally oriented panels 316 having longitudinally extending side edges. Adjacent panels 316 are welded along their longitudinally extending side edges, creating longitudinal joints 317 and forming the intermediate ring 312. Each of the panels 316 extends the entire height of the intermediate ring 312, so that no circumferentially extending weld joints exist within the intermediate ring 312. Each of the panels 316 generally have a length-to-width aspect ratio of at least 4:1 and can have a length-to-width aspect ratio of at least 6:1 or at least 8:1. Accordingly, as strain accumulates, bulging and cracking in the coke drum wall 308 are minimized since thcre are no circumferentially extending weld joints in the intermediate ring 312.

While the upper ring 310 and the lower ring 312 shown in FIG. 3 are comprised of panels 318 which extend the entire height of the upper ring 310 and the lower ring 312, respectively, such a configuration is not required in order for a coke drum to fall within the scope of the present invention.

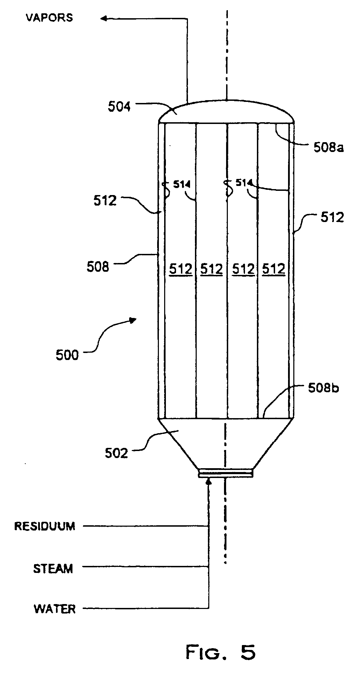

Referring now to FIG. 4, shown therein is a second embodiment of the present invention. Coke drum 400 has a lower section 402, an upper head 404, and a wall 408. The lower section 402 has a lower head 403. The wall 408 is a hollow, generally cylindrical structure and is comprised of an upper ring 410, an intermediate ring 412, and a lower ring 414. The upper head 404 is circumferentially welded to the upper end 410a of the upper ring 410, the lower end 410b of the upper ring 410 is circumferentially welded to the upper end 412a of the intermediate ring 412, and the lower end 412b of the intermediate ring 412 is circumferentially welded to the upper end 414a of the lower ring 414. Further, the lower section 402 is joined to the lower end 414b of the lower ring 414 and the lower head 402 is capable of being moved from a coking operation position to a coke removal position for removal of coke from the coke drum 400. Thus, the assembly of the lower section 402, the upper head 404, and the wall 408, including the upper ring 410, intermediate ring 412, and lower ring 414, constitutes a coke drum 400 which is substantially pressure-tight except for conduits which provide communication with the interior of the coke drum 200.

The upper ring 410 and the lower ring 414 comprise panels 416 which are welded along adjacent edges thereof to produce a wall structure similar to that shown in FIG. 2. The upper ring 410 has a circumferentially extending weld joint 418 and the lower ring 414 has a circumferentially extending weld joint 420. It is also within the scope of the present invention for either or both of the upper ring 410 and the lower ring 414 to have a plurality of circumferentially extending weld joints. The intermediate ring 412, by contrast, comprises a plurality of longitudinally oriented panels 422 which are welded along adjacent longitudinally extending side edges thereof to form longitudinal joints 424 and which extend the entire height of the intermediate ring 412. Thus, as in the first embodiment, no circumferentially extending weld joints exist within the intermediate ring 412. Each of the panels 422 generally have a length-to-width aspect ratio of at least 4:1 and can have a length-to-width aspect ratio of at least 6:1 or at least 8:1.

Generally, the heights of each of the upper ring 410 and the lower ring 414, measured parallel to the longitudinal axis 426 of the wall 408, are in a range of zero percent to about 25 percent of the height of the wall 408 parallel to the longitudinal axis 426 and can be in a range of 10 percent to 20 percent of the height of the wall 408. Accordingly, the height of the intermediate ring 412 falls within a range of about 50 percent to 100 percent of the height of the wall 408, as measured parallel to the longitudinal axis 426, and can be at least 60 percent, at least 70 percent, in a range of 50 percent to 80 percent, or in a range of 60 percent to 80 percent of the height of the wall 408. Accordingly, the height of the upper ring 410 is less than or equal to about 25 percent of the height of the wall 408, measured parallel to the longitudinal axis 426. Further, if any of the rings 410, 412, or 414 have varying heights, the height of the ring is defined as the average height of the ring for purposes of the height relationships disclosed herein. Comparing FIGS. 2 and 4, it can be seen that the intermediate ring 412 corresponds to the intermediate portion 212 wherein bulging and thermal fatigue cracking tends to occur.

While FIGS. 3 and 4 each show a coke drum with a wall having a plurality of rings, such a configuration is not required in order for a coke drum to fall within the scope of the present invention.

Referring now to FIG. 5, a third embodiment of the present invention is shown therein. Coke drum 500 has a lower section 502, an upper head 504, and a wall 508. The lower section 502 has a lower head 503. The upper head 504 is circumferentially welded to the upper end 508a of the coke drum wall 508. The lower section 502 is joined to the lower end 508b of the coke drum wall 508 and the lower head 502 is capable of being moved from a coking operation position to a coke removal position for removal of coke from the coke drum 500. Thus, the assembly of the lower section 502, the upper head 504, and the wall 508 constitutes a coke drum 500 which is substantially pressure-tight except for conduits which provide communication with the interior of the coke drum 500.

The coke drum wall 508 is comprised of a plurality of longitudinally oriented panels 512 having longitudinally extending side edges. Adjacent panels 512 are welded along their longitudinally extending side edges to form longitudinally extending joints 514 which extend the full height of the coke drum wall 508. Thus, no circumferentially extending weld joints exist within the coke drum wall 508. Each of the panels 512 generally have a length-to-width aspect ratio of at least 4:1 and can have a length-to-width aspect ratio of at least 6:1 or at least 8:1.

The present invention also include a coke drum having an upper section, including an upper head, and a lower section, including a lower head, wherein at least a portion of the lower head can be moved from a coking operation position to a coke removal position for the removal of coke form the coke drum. The upper section can include any desirable structure along with the upper head, for example, but not limited to, upper rings 310 or 410. A coke drum with an upper section and a lower section having only an upper head and lower head, respectively, is also within the scope of the present invention.

While the embodiments disclosed herein describe particular ways of joining one component to another, any method for joining the elements which results in a coke drum that is useful in a refining operation for the production of coke is within the scope of the present invention.

The present invention also includes a method of constructing a coke drum of the present invention, for example, a coke drum corresponding to any of the embodiments of the present invention disclosed herein.

The present invention also includes a method of operating a coke drum of the present invention, for example, a coke drum corresponding to any of the embodiments of the present invention disclosed herein. The method includes the steps of accumulating coke in a coke drum of the present invention; introducing water into a lower portion of the coke drum to quench coke accumulated in the coke drum; removing vapors from an upper portion of the coke drum; moving at least a portion of the lower section from a coking operation position to a coke removal position to thereby form a coke removal opening after the coke accumulated in the coke drum has been quenched; and removing thus quenched coke from the coke drum via the coke removal opening.

Although the present invention has been described with reference to a presently preferred embodiment, it will be appreciated by those skilled in the art that various modifications, alternatives, variations, etc., may be made without departing from the spirit and scope of the invention as defined in the appended claims.

## Claims

1. A coke drum, comprising:
an upper head;
a lower section, at least a portion of which is capable of being moved from a coking operation position to a coke removal position for removal of coke from said coke drum; and
a generally cylindrical wall having a height parallel to its longitudinal axis and extending between and joined to said upper head and said lower section, said wall comprising:
an upper ring having a height parallel to said longitudinal axis of said wall which is in a range of zero percent to 25 percent of said height of said wall;
a lower ring having a height parallel to said longitudinal axis of said wall which is in a range of zero percent to 25 percent of said height of said wall; and
an intermediate ring, extending between and joined to said upper ring, if present, and said lower ring, if present, said intermediate ring having a height parallel to said longitudinal axis of said wall which is equal to a cumulative height of said upper ring and said lower ring subtracted from said height of said wall,
wherein said intermediate ring is free of joints which extend in a circumferential direction of said wall.

2. A coke drum, according to claim 1, wherein said intermediate ring comprises a plurality of longitudinally oriented panels, each of said plurality of longitudinally oriented panels having longitudinally extending side edges, each of said plurality of longitudinally oriented panels having a length-to-width aspect ratio which is equal to or greater than 4:1, wherein adjacent panels of said plurality of longitudinally oriented panels are joined together along their longitudinally extending side edges to form said intermediate ring.

3. A coke drum, according to claim 1, wherein said intermediate ring comprises a plurality of longitudinally oriented panels, each of said plurality of longitudinally oriented panels having longitudinally extending side edges, each of said plurality of longitudinally oriented panels having a length-to-width aspect ratio which is equal to or greater than 6:1, wherein adjacent panels of said plurality of longitudinally oriented panels are joined together along their longitudinally extending side edges to form said intermediate ring.

4. A coke drum, according to claim 1, wherein said intermediate ring consists of a plurality of longitudinally oriented panels, each of said plurality of longitudinally oriented panels having longitudinally extending side edges, each of said plurality of longitudinally oriented panels having a length-to-width aspect ratio which is equal to or greater than 8:1, wherein adjacent panels of said plurality of longitudinally oriented panels are joined together along their longitudinally extending side edges to form said intermediate ring.

5. A coke drum, according to claim 1, wherein said height of said intermediate ring is in a range of 50 percent to 80 percent of said height of said wall.

6. A coke drum, according to claim 1, wherein said height of said intermediate ring is in a range of 60 percent to 80 percent of said height of said wall.

7. A coke drum, according to claim 1, wherein said height of said intermediate ring is at least 60 percent of said height of said wall.

8. A coke drum, according to claim 1, wherein said height of said intermediate ring is at least 70 percent of said height of said wall.

9. A coke drum, according to claim 1, wherein said height of said lower ring is in a range of 10 percent to 20 percent of said height of said wall.

10. A coke drum, according to claim 1, wherein said height of said upper ring is an average height of said upper ring and said height of said lower ring is an average height of said lower ring.

11. A coke drum, comprising:
an upper section, including an upper head;
a lower section, including a lower head, wherein at least a portion of the lower head is capable of being moved from a coking operation position to a coke removal position for removal of coke from said coke drum; and
a generally cylindrical wall extending between said upper section and said lower section, said wall having a longitudinal axis and comprising a plurality of longitudinally oriented panels, each of said plurality of longitudinally oriented panels having a plurality of longitudinally extending side edges, each of said plurality of longitudinally oriented panels having a length-to-width aspect ratio which is equal to or greater than 4:1, wherein adjacent panels of said plurality of longitudinally oriented panels are joined together along their longitudinally extending side edges to form said wall,
wherein said wall is free of joints which extend in a circumferential direction of said wall;

12. A coke drum, according to claim 11, wherein said wall extends from said upper head to said lower head.

13. A coke drum, according to claim 11, wherein said length-to-width aspect ratio is equal to or greater than 6:1.

14. A coke drum, according to claim 11, wherein said length-to-width aspect ratio is equal to or greater than 8:1.

15. A coking system, comprising:
a plurality of coke drums for accumulating coke; and
an input valve which can selectively provide communication between a source of residuum and said plurality of coke drums, wherein said valve is capable of receiving a flow of residuum from said source of residuum and providing said flow of residuum to a selected one of said plurality of coke drums,
wherein at least one of said plurality of coke drums comprises:
an upper head;
a lower section, at least a portion of which is capable of being moved from a coking operation position to a coke removal position for removal of coke from the respective coke drum; and
a generally cylindrical wall having a height parallel to its longitudinal axis and extending between said upper head and said lower section, said wall comprising:
an upper ring having a height parallel to said longitudinal axis of said wall which is in a range of zero percent to 25 percent of said height of said wall;
a lower ring having a height parallel to said longitudinal axis of said wall which is in a range of zero percent to 25 percent of said height of said wall; and
an intermediate ring, extending between and joined to said upper ring, if present, and said lower ring, if present, said intermediate ring having a height parallel to said longitudinal axis of said wall which is equal to a cumulative height of said upper ring and said lower ring subtracted from said height of said wall,
wherein said intermediate ring is free of joints which extend in a circumferential direction of said wall.

16. A coking system, according to claim 15, further comprising a heater which is in communication with each of said source of residuum and said valve, wherein said heater is capable of heating said flow of residuum prior to said valve receiving said flow of residuum, and
wherein said source of residuum is a fractionator.

17. A coking system, according to claim 15, wherein said intermediate ring comprises a plurality of longitudinally oriented panels, each of said plurality of longitudinally oriented panels having longitudinally extending side edges, each of said plurality of longitudinally oriented panels having a length-to-width aspect ratio which is equal to or greater than 4:1, wherein adjacent panels of said plurality of longitudinally oriented panels are joined together along their longitudinally extending side edges to form said intermediate ring.

18. A coking system, according to claim 15, wherein said intermediate ring consists of a plurality of longitudinally oriented panels, each of said plurality of longitudinally oriented panels having longitudinally extending side edges, each of said plurality of longitudinally oriented panels having a length-to-width aspect ratio which is equal to or greater than 6:1, wherein adjacent panels of said plurality of longitudinally oriented panels are joined together along their longitudinally extending side edges to form said intermediate ring.

19. A coking system, according to claim 15, wherein said intermediate ring comprises a plurality of longitudinally oriented panels, each of said plurality of longitudinally oriented panels having longitudinally extending side edges, each of said plurality of longitudinally oriented panels having a length-to-width aspect ratio which is equal to or greater than 8:1, wherein adjacent panels of said plurality of longitudinally oriented panels are joined together along their longitudinally extending side edges to form said intermediate ring.

20. A coking system, according to claim 15, wherein said height of said intermediate ring is in a range of 50 percent to 80 percent of said height of said wall.

21. A coking system, according to claim 15, wherein said height of said intermediate ring is in a range of 60 percent to 80 percent of said height of said wall.

22. A coking system, according to claim 15, wherein said height of said intermediate ring is at least 60 percent of said height of said wall.

23. A coking system, according to claim 15, wherein said height of said intermediate ring is at least 70 percent of said height of said wall.

24. A coking system, according to claim 15, wherein said height of said lower ring is in a range of 10 percent to 20 percent of said height of said wall.

25. A coking system, according to claim 15, wherein said height of said upper ring is an average height of said upper ring and said height of said lower ring is an average height of said lower ring.

26. A coking system, comprising:
a plurality of coke drums for accumulating coke; and
an input valve which can selectively provide communication between a source of residuum and said plurality of coke drums, wherein said valve is capable of receiving a flow of residuum from said source of residuum and providing said flow of residuum to a selected one of said plurality of coke drums,
wherein at least one of said plurality of coke drums comprises:
an upper section, including an upper hcad;
a lower section, including a lower head, wherein at least a portion of the lower head is capable of being moved from a coking operation position to a coke removal position for removal of coke from the respective coke drum; and
a generally cylindrical wall extending between said upper section and said lower section, said wall having a longitudinal axis and consisting of a plurality of longitudinally oriented panels, each of said plurality of longitudinally oriented panels having a plurality of longitudinally extending side edges, each of said plurality of longitudinally oriented panels having a length-to-width aspect ratio which is equal to or greater than 4:1, wherein each adjacent pair of said plurality of longitudinally oriented panels are joined together along their longitudinally extending side edges to form said wall,
wherein said wall is free of joints which extend in a circumferential direction of said wall.

27. A coking system, according to claim 26, further comprising a heater which is in communication with each of said source of residuum and said valve, wherein said heater is capable of heating said flow of residuum prior to said valve receiving said flow of residuum, and
wherein said source of residuum is a fractionator.

28. A coking system, according to claim 26, wherein said wall extends from said upper head to said lower head.

29. A coking system, according to claim 26, wherein said length-to-width aspect ratio is equal to or greater than 6:1.

30. A coking system, according to claim 26, wherein said length-to-width aspect ratio is equal to or greater than 8:1.

31. A method of constructing a coke drum, comprising the steps of:
providing an upper head;
providing a lower section, at least a portion of which is capable of being moved from a coking operation position to a coke removal position for removal of coke from said coke drum;
providing a generally cylindrical wall which extends between said upper head and said lower section, said wall having a height parallel to its longitudinal axis; and
joining said wall to said upper head and said lower section, wherein said wall is constructed by a method comprising the steps of:
providing an upper ring having a height parallel to said longitudinal axis of said wall, which is in a range of zero percent to 25 percent of said height of said wall;
providing a lower ring having a height, parallel to said longitudinal axis of said wall, which is in a range of zero percent to 25 percent of said height of said wall;
providing an intermediate ring, extending between said upper ring, if present, and said lower ring, if present, said intermediate ring having a height which is equal to a cumulative height of said upper ring and said lower ring subtracted from said height of said wall, said intermediate ring being free of joints which extend in a circumferential direction of said wall; and
joining said intermediate ring to said upper ring, if present, and said lower ring, if present.

32. A method of constructing a coke drum, according to claim 31, wherein said intermediate ring is constructed according to a method comprising the steps of:
providing a plurality of longitudinally oriented panels, each of said plurality of longitudinally oriented panels having longitudinally extending side edges, each of said plurality of longitudinally oriented panels having a length-to-width aspect ratio which is equal to or greater than 4:1; and
joining adjacent panels of said plurality of longitudinally oriented panels along their longitudinally extending side edges to form said intermediate ring

33. A method of constructing a coke drum, according to claim 31, wherein said height of said intermediate ring is in a range of 50 percent to 80 percent of said height of said wall.

34. A method of constructing a coke drum, according to claim 31, wherein said height of said intermediate ring is at least 60 percent of said height of said wall.

35. A method of constructing a coke drum, according to claim 31, wherein said height of said lower ring is in a range of 10 percent to 20 percent of said height of said wall.

36. A method of constructing a coke drum, comprising the steps of
providing an upper section, including an upper head;
providing a lower section, including a lower head, wherein at least a portion of the lower head is capable of being moved from a coking operation position to a coke removal position for removal of coke from said coke drum;
providing a plurality of longitudinally oriented panels having a plurality of longitudinally extending edges, each of said plurality of said longitudinally oriented panels having a length-to-width ratio which is equal to or greater than 4:1;
joining each adjacent pair of said longitudinally oriented panels together along their longitudinally extending side edges to form a generally cylindrical wall which is free of joints that extend in a circumferential direction of said wall; and
joining said wall to said upper section and said lower section.

37. A method of operating a coke drum, comprising the steps of:
accumulating coke in a coke drum, wherein said coke drum comprises:
an upper head;
a lower section, at least a portion of which is capable of being moved from a coking operation position to a coke removal position for removal of coke from said coke drum; and
a generally cylindrical wall having a height parallel to its longitudinal axis and extending between and joined to said upper head and said lower section, said wall comprising:
an upper ring having a height parallel to said longitudinal axis of said wall which is in a range of zero percent to 25 percent of said height of said wall;
a lower ring having a height parallel to said longitudinal axis of said wall which is in a range of zero percent to 25 percent of said height of said wall; and
an intermediate ring, extending between said upper ring, if present, and said lower ring, if present, said intermediate ring having a height which is equal to a cumulative length of said upper ring and said lower ring subtracted from said length of said wall, said intermediate ring being free of joints which extend in a circumferential direction of said wall;
introducing water into a lower portion of said coke drum to quench coke accumulated in said coke drum;
removing vapors from an upper portion of said coke drum;
moving said at least a portion of said lower section from said coking operation position to said coke removal position to thereby form a coke removal opening after the coke accumulated in said coke drum has been quenched; and
removing thus quenched coke from said coke drum via said coke removal opening.

38. A method of operating a coke drum, according to claim 37, wherein said intermediate ring comprises a plurality of longitudinally oriented panels, each of said plurality of longitudinally oriented panels having longitudinally extending side edges, each of said plurality of longitudinally oriented panels having a length-to-width aspect ratio which is equal to or greater than 4:1, wherein adjacent panels of said plurality of longitudinally oriented panels are joined together along their longitudinally extending side edges to form said intermediate ring.

39. A method of operating a coke drum, according to claim 37, wherein said height of said intermediate ring is in a range of 50 percent to 80 percent of said height of said wall.

40. A method of operating a coke drum, according to claim 37, wherein said height of said intermediate ring is at least 60 percent of said height of said wall.

41. A method of operating a coke drum, according to claim 37, wherein said height of said lower ring is in a range of 10 percent to 20 percent of said height of said wall.
